Europäisches Patentamt

European Patent Office

Office européen des brevets

Veröffentlichungsnummer: **0 290 818**
**A1**

## EUROPÄISCHE PATENTANMELDUNG

21 Anmeldenummer: 88106097.4

22 Anmeldetag: 16.04.88

51 Int. Cl.4 **E04C 2/42**

30 Priorität: 14.05.87 DE 8706922 U

43 Veröffentlichungstag der Anmeldung:
**17.11.88 Patentblatt 88/46**

84 Benannte Vertragsstaaten:
**AT CH IT LI NL**

71 Anmelder: **Otto Albert Lüghausen KG**
**Wilhelmstrasse 146**
**D-5200 Siegburg(DE)**

72 Erfinder: **Falger, Uwe**
**Wilhelmstr. 146**
**D-5200 Siegburg(DE)**

74 Vertreter: **Peerbooms, Rudolf, Dipl.-Phys.**
**Postfach 200 208 Dickmannstrasse 45C**
**D-5600 Wuppertal 2(DE)**

54 **Vorgefertigtes, gitterförmiges Flächenelement aus Holz für Bau- oder Ausbauzwecke.**

57 Ein gitterförmiges Flächenelement für Bau-oder Ausbauzwecke, das aus zwei Gruppen (I, II) jeweils paralleler, sich kreuzender Holzstäbe (1, 2) besteht, soll derart ausgebildet werden, daß es möglichst universell zur Herstellung von Raumteilern, Zäunen, Toren oder dekorativen Verkleidungen geeignet und auf die jeweils erforderlichen Abmessungen zurechtschneidbar ist. Zu diesem Zweck weisen die Holzstäbe (1) der ersten Gruppe (I) in regelmäßigen Abständen an zwei sich gegenüberliegenden Seiten (5, 6) ausgeklinkte Ausnehmungen (7, 8) und die Holzstäbe (2) der zweiten Gruppe (II) an nur einer Seite (9 oder 10) ausgeklinkte Ausnehmungen (11, 12) auf, und die Holzstäbe (1, 2) beider Gruppen (I, II) sind im Bereich ihrer Ausnehmungen (7, 8, 11, 12) ineinandergefügt und zu einem starren Gitter verleimt.

Fig. 4

EP 0 290 818 A1

## Vorgefertigtes, gitterförmiges Flächenelement aus Holz für Bau-oder Ausbauzwecke

Die Erfindung betrifft ein vorgefertigtes, gitterförmiges Flächenelement für Bau-oder Ausbauzwecke, das aus zwei Gruppen jeweils paralleler, sich kreuzender Holzstäbe besteht.

Vorgefertigte Holzgitter sind in verschiedenen Ausführungsformen, z. B. als Jägerzaungitter, Rosen-oder Berankungsgitter und dgl. bekannt. Ihre Verwendung ist aber im allgemeinen auf einen oder wenige Fälle beschränkt.

Der Erfindung liegt die Aufgabe zugrunde, ein gitterartiges, in sich stabiles Flächenelement zu schaffen, das für zahlreiche Anwendungen, z.B. zur Herstellung von Raumteilern, Zäunen, Toren oder dekorativen Verkleidungen geeignet und auf die jeweils erforderlichen Abmessungen zurechtschneidbar ist.

Zur Lösung dieser Aufgabe ist erfindungsgemäß vorgesehen, daß die Holzstäbe der ersten Gruppe in regelmäßigen Abständen an zwei sich gegenüberliegenden Seiten ausgeklinkte Ausnehmungen und die Holzstäbe der zweiten Gruppe an nur einer Seite ausgeklinkte Ausnehmungen aufweisen und daß die Holzstäbe beider Gruppen im Bereich ihrer Ausnehmungen ineinandergefügt und zu einem starren Gitter verleimt sind. Durch die Verleimung der Holzstäbe an jedem Berührungspunkt ist ein in sich stabiles Holzgitter von hoher Festigkeit erreicht. Das als Flächenelement von etwa 1 x 2,5 Meter vorgefertigte Holzgitter kann den jeweiligen Erfordernissen entsprechend auf jede beliebige Größe zugeschnitten werden, beispielsweise auch rund oder schräg, ohne daß dabei die Stabilität der Holzkonstruktion beeinträchtigt wird. Zudem ist durch die versetzte Anordnung der Holzstäbe der zweiten Gruppe eine besondere Standfestigkeit des Holzgitters gegeben, wodurch sich dieses auch als tragendes Element verwenden läßt.

Der Erfindung zufolge kann vorgesehen werden, daß die Holzstäbe gleichen Querschnitt aufweisen und an beiden Gitterhauptseiten oberflächenbündig ineinandergefügt sind. Dadurch ergeben sich Flächenelemente, deren sich kreuzende Stäbe in einer Ebene liegen.

Weiterhin kann vorgesehen werden, daß bei den Holzstäben der ersten Gruppe die in Längsrichtung aufeinanderfolgenden Ausnehmungen jeweils einzeln abwechselnd an beiden gegenüberliegenden ausgeklinkten Stabseiten angeordnet sind. Durch eine solche abwechselnde Anordnung der Holzstäbe der zweiten Gruppe wird ein alterungsbedingtes Verziehen dieser Holzstäbe weitestgehend kompensiert und einem Verbiegen des Gitters vorgebeugt.

Zur Erzielung besonderer optischer Erscheinungsformen kann alternativ vorgesehen werden, daß bei den Holzstäben der ersten Gruppe die in Längsrichtung aufeinanderfolgenden Ausnehmungen jeweils paarweise oder gruppenweise abwechselnd an den beiden ausgeklinkten Stabseiten angeordnet sind.

Der Erfindung zufolge kann das Gitter quadratische Gitterfelder aufweisen und entweder aus Vertikal-und Horizontalstäben oder aus um 45° bzw. 135° gegenüber der Vertikalen geneigten Holzstäben bestehen, wobei das im letzteren Fall sich ergebene Rautengitter als stabiles Berankungsgitter oder, je nach Stabdicke, auch als Ziergitter verwendbar ist.

Ferner kann vorgesehen werden, daß der Abstand zwischen den Vertikalstäben um das Doppelte oder mehr größer als der Abstand der Horizontalstäbe ist. Hierdurch erhält man ein Flächengebilde in Art eines Holzflechtzauns, das sich beispielsweise als Gartenzaun oder als Begrenzungsgitter einsetzen läßt.

Der Querschnitt der Stäbe beträgt etwa 35 x 40 Millimeter, wobei die Ausnehmungen an den schmäleren Stabseiten liegen. Die Stäbe können aus druckimprägniertem Holz bestehen, wodurch eine besondere Witterungsbeständigkeit gewährleistet wird.

Ferner kann vorgesehen werden, daß die Stäbe gruppenweise aus unterschiedlichem Material bestehen oder unterschiedlich oberflächenbehandelt sind. Hiermit lassen sich, wie bereits erwähnt, besonders effektvolle Zier-oder Ornamentengitter herstellen, wie sie beispielsweise bei Raumteilern Anwendung finden.

Schließlich kann der Erfindung zufolge vorgesehen werden, daß dem Flächenelement ebene, an seiner Rückseite befestigbare Hintergrundplatten, z.B. aus Holz, Glas, Spiegelglas oder Kunststoff zugeordnet sind. Durch eine derartige Kombination des Flächenelements mit Hintergrundplatten lassen sich beispielsweise Türen herstellen, deren Rückseite aus einem Spiegel oder aus einer weißen Füllung besteht.

Der Gegenstand der Erfindung wird im folgenden anhand der Zeichnung näher erläutert. In der Zeichnung zeigen:

Fig. 1 eine Draufsicht auf eine erste Ausführungsform eines gitterförmigen Flächenelements,

Fig. 2 eine Draufsicht auf eine alternative Ausführungsform,

Fig. 3 eine Draufsicht auf eine weitere, alternative Ausführungsform des gitterförmigen Flächenelements,

Fig. 4 eine perspektivische Explosiv-Darstellung eines Eckbereiches des gitterförmigen Flächenelementes nach Fig. 1 und

Fig. 5 eine perspektivische Darstellung eines gitterförmigen Flächenelements mit montierter Rückplatte aus Spiegelglas.

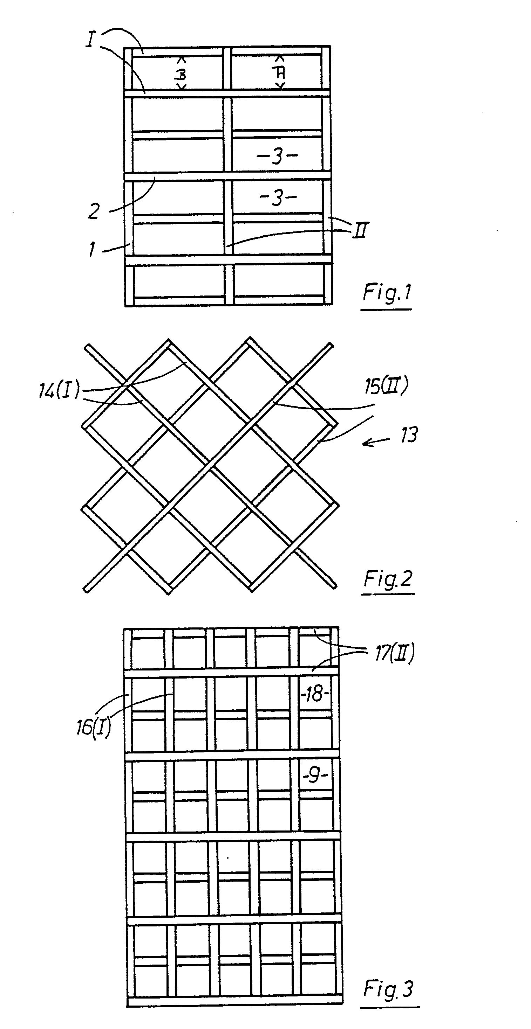

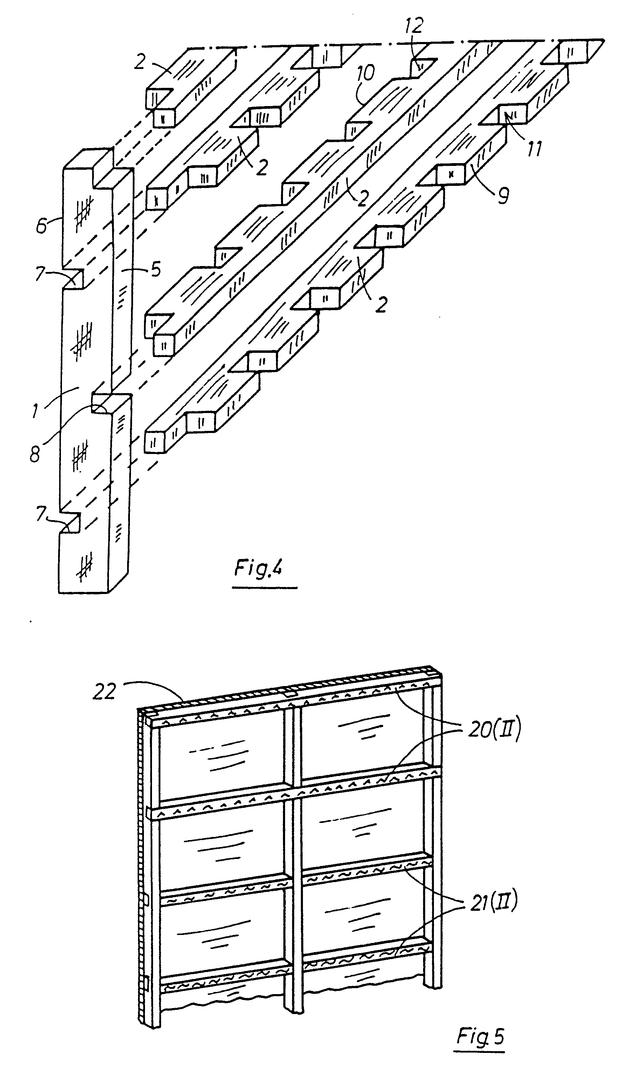

Fig. 1 zeigt ein vorgefertigtes, gitterförmiges Flächenelement für Bau-oder Ausbauzwecke, das beispielsweise in Abmessungen von 1,80 bis 2,50 Meter Höhe und 0,80 bis 1,20 Meter Breite vorgefertigt wird. Es besteht aus zwei Gruppen I und II jeweils paralleler, sich kreuzender Holzstäbe 1, 2, wobei der Abstand A zwischen den vertikalen Holzstäben 1 etwa doppelt so groß wie die Abstand B zwischen den horizontalen Holzstäben 2 ist, so daß sich längliche, horizontale Gitterfelder 3 ergeben. Die vertikalen Holzstäbe, vgl. auch Fig. 4, sind in regelmäßigen Abständen an zwei einander gegenüberliegenden Seiten 5, 6 mit ausgeklinkten Ausnehmungen 7, 8 versehen. Die horizontalen Holzstäbe 2 weisen jeweils nur an einer Seite 9 bzw. 10 ausgeklinkte Ausnehmungen 11, 12 auf. Die Holzstäbe 1 und 2 sind mit ihren Ausklinkungen ineinandergefügt und an allen Berührungsstellen zu einem starren Gitter verleimt. Die vertikalen und horizontalen Holzstäbe 1, 2 besitzen gleichen Querschnitt und sind an beiden Gitterhauptseiten oberflächenbündig ineinandergefügt. Die vertikalen Holzstäbe 1 sind jeweils einzeln abwechselnd an den beiden Hauptseiten 5, 6 mit den Ausklinkungen 7, 8 versehen, so daß beim Gesamtgitter (vgl. Fig. 1) jeder zweite Horizontalstab 2 durchläuft und jeweils der dazwischen liegende Horizontalstab hinter den Vertikalstäben 1 liegt.

Fig. 2 zeigt ein Rautengitter 13, bei dem die parallelen Stäbe 14 der ersten Gruppe I in der anhand Fig. 4 veranschaulichten Weise jeweils an zwei sich gegenüberliegenden Seiten mit Ausklinkungen und die hierzu rechtwinkligen Stäbe 15 der Gruppe II jeweils nur an einer Seite mit den Ausklinkungen versehen sind.

Fig. 3 zeigt ein in gleicher Weise aufgebautes Holzgitter aus vertikalen Stäben 16 und horizontalen Stäben 17, wobei alle Stäbe äquidistant angeordnet sind, so daß sich quadratische Gitterfelder 18 ergeben. Auch hier sind die Gitterstäbe an allen Kreuzungspunkten fest miteinander verleimt, so daß das Gitter ohne Beeinträchtigung seiner Festigkeit auf die jeweils gewünschten Abmessungen zurechtschneidbar ist.

Bei allen Ausführungsbeispielen weisen die Stäbe einen rechteckigen Querschnitt von etwa 35 x 40 Millimetern auf, wobei die Ausklinkungen jeweils an den schmäleren Seiten 5, 6, 9, 10 der Stäbe ausgenommen sind.

Beim Ausführungsbeispiel nach Fig. 5 sind die vertikalen Holzstäbe 19 der ersten Gruppe I jeweils paarweise abwechselnd an ihrer Vorder-und Rückseite mit Ausklinkungen versehen, so daß jeweils zwei übereinanderliegende Horizontalstäbe 20 durchlaufen und zwei nachfolgende Horizontalstäbe 21 hinter den Vertikalstäben 19 liegen. An der Rückseite des Gitters ist eine Hintergrundplatte 22 befestigt, bei der es sich um eine Holzplatte oder auch um eine Glas-oder Spiegelglasplatte handeln kann, durch die die Gitterfelder rückwärtig geschlossen sind.

Bei allen Ausführungsbeispielen sind zur Vereinfachung der Zeichnung nur wenige Horizontal-und Querstäbe gezeigt. In der Praxis werden die Gitterstäbe zweckmäßigerweise in Abständen von 10 bis 20 Zentimetern angeordnet, so daß beispielsweise ein Gitter von einer Gesamtabmessung von 1 x 2 Metern aus 20 Holzstäben der einen Gruppe und 10 Holzstäben der anderen Gruppe bestehen kann.

## Ansprüche

1. Vorgefertigtes, gitterförmiges Flächenelement für Bau-oder Ausbauzwecke, bestehend aus zwei Gruppen jeweils paralleler, sich kreuzender Holzstäbe, dadurch gekennzeichnet, daß die Holzstäbe (1) der ersten Gruppe (I) in regelmäßigen Abständen an zwei sich gegenüberliegenden Seiten (5, 6) ausgeklinkte Ausnehmungen (7, 8) und die Holzstäbe (2) der zweiten Gruppe (II) an nur einer Seite (9 oder 10) ausgeklinkte Ausnehmungen (11, 12) aufweisen und daß die Holzstäbe (1, 2) beider Gruppen (I, II) im Bereich ihrer Ausnehmungen (7, 8, 11, 12) ineinandergefügt und zu einem starren Gitter verleimt sind.

2. Flächenelement nach Anspruch 1, dadurch gekennzeichnet, daß die Holzstäbe (1, 2) gleichen Querschnitt aufweisen und an beiden Gitterhauptseiten oberflächenbündig ineinandergefügt sind.

3. Flächenelement nach den Ansprüchen 1 und 2, dadurch gekennzeichnet, daß bei den Holzstäben (1) der ersten Gruppe (I) die in Längsrichtung aufeinanderfolgenden Ausnehmungen (7, 8) jeweils einzeln abwechselnd an den beiden gegenüberliegenden ausgeklinkten Stabseiten (5, 6) angeordnet sind.

4. Flächenelement nach Anspruch 1 und 2, dadurch gekennzeichnet, daß bei den Holzstäben (19) der ersten Gruppe (I) die in Längsrichtung aufeinanderfolgenden Ausnehmungen jeweils paarweise oder gruppenweise abwechselnd an den beiden ausgeklinkten Stabseiten angeordnet sind.

5. Flächenelement nach Anspruch 1, dadurch gekennzeichnet, daß das Gitter aus Vertikal-(1) und Horizontalstäben (2) besteht.

6. Flächenelement nach Anspruch 1, dadurch gekennzeichnet, daß das Gitter aus jeweils um 45° bzw. 135° gegenüber der Vertikalen geneigten Stäben (14, 15) als Rautengitter ausgebildet ist.

7. Flächenelement nach den Ansprüchen 5 oder 6, dadurch gekennzeichnet, daß das Gitter quadratische Gitterfelder (18) aufweist.

8. Flächenelement nach Anspruch 5, dadurch gekennzeichnet, daß der Abstand (A) zwischen den Vertikalstäben (1) um das Doppelte oder mehr größer als der Abstand (B) der Horizontalstäbe (2) ist.

9. Flächenelement nach einem der Ansprüche 1 bis 8, dadurch gekennzeichnet, daß der Querschnitt der Stäbe (1, 2) etwa 35 x 40 Millimeter beträgt und daß die Ausnehmungen (7, 8, 11, 12) an den schmäleren Stabseiten (5, 6, 9, 10) liegen.

10. Flächenelement nach einem der Ansprüche 1 bis 9, dadurch gekennzeichnet, daß die Stäbe (1, 2; 14, 15; 16, 17; 19, 20, 21) aus druckimprägniertem Holz bestehen.

11. Flächenelement nach einem der Ansprüche 1 bis 9, dadurch gekennzeichnet, daß die Stäbe (1, 2; 14, 15; 16, 17; 19, 20, 21) jeweils gruppenweise aus unterschiedlichem Material bestehen oder unterschiedlich oberflächenbehandelt sind.

12. Flächenelement nach einem der vorangegangenen Ansprüche, dadurch gekennzeichnet, daß dem Flächenelement ebene, an seiner Rückseite befestigbare Hintergrundplatten (22), z.B. aus Holz, Glas, Spiegelglas oder Kunststoff, zugeordnet sind.

*Fig.1*

*Fig.2*

*Fig.3*

LÜGHAUSEN
4667/EPÜ

Fig.4

Fig 5

LÜGHAUSEN
4667/EPÜ

Europäisches
Patentamt

**EUROPÄISCHER RECHERCHENBERICHT**

Nummer der Anmeldung

EP 88 10 6097

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP-A-0 033 257 (DESIGN PROGRAMME S.A.) <br> * Das ganze Dokument * | 1-3,5,9 -12 | E 04 C 2/42 |
| Y | | 4 | |
| A | | 8 | |
| | --- | | |
| Y | DE-C- 660 199 (KAPPERT) <br> * Figur 1 * | 4 | |
| | --- | | |
| A | US-A-4 282 695 (LEW) <br> * Figur 1 * | 6,7 | |
| | ----- | | |

| | |
|---|---|
| | **RECHERCHIERTE SACHGEBIETE (Int. Cl.4)** |
| | E 04 C |

Der vorliegende Recherchenbericht wurde für alle Patentansprüche erstellt

| Recherchenort | Abschlußdatum der Recherche | Prüfer |
|---|---|---|
| DEN HAAG | 08-08-1988 | MYSLIWETZ W.P. |

EPO FORM 1503 03.82 (P0403)